# EUROPEAN PATENT APPLICATION

(11) **EP 1 883 001 A2**
(43) Date of publication of application: **30.01.2008**
(21) Application number: 07111489.6
(22) Date of filing: 02.07.2007
(51) Int. Cl.: G06F 1/16

(54) **A Slave Unit for a Portable Communication Terminal**

(30) Priority: 26.07.2006 KR 20060070414
(71) Applicant: Samsung Electronics Co., Ltd., Suwon-si Gyeonggi-do (KR)
(72) Inventor: Ahn, Chi-Young, Yeongtong-gu, Suwon-si Gyeonggi-do (KR); Yeo, Young-Ju, Yeongtong-gu, Suwon-si Gyeonggi-do (KR); Kim, Young-S., Yeongtong-gu, Suwon-si Gyeonggi-do (KR); Hwang, Chang-Hwan, Yeongtong-gu, Suwon-si Gyeonggi-do (KR)
(74) Representative: Grünecker, Kinkeldey, Stockmair & Schwanhäusser Anwaltssozietät

(57) **Abstract**

Provided is a slave unit for a multimedia portable communication terminal, which can be used or carried independently of or as one body with the multimedia portable terminal. The slave unit includes a first extending module employed as the slave unit as being connected with the multimedia portable terminal in one of a wired and wireless manner, a second extending module employed as the slave unit as being connected in parallel with the first extending module, and a combining means for combining the first extending module with the second extending module as one body in parallel with each other.

## Description

The present invention relates generally to a portable communication terminal such as a Digital Multimedia Broadcasting (DMB) phone, a game phone, a chatting phone, a camera phone, an MP3 phone, a cellular phone, a Personal Communication Service (PCS) phone, a Personal Digital Assistant (PDA), or a Hand Held Phone (HHP), and in particular, to a slave unit for a multimedia portable communication terminal, which can be used or carried independently of or as one body with the portable communication terminal.

Generally, a "portable communication apparatus" refers to an electronic apparatus, which a user can carry with him/her to perform wireless communication with a desired partner. In consideration of portability, designs of such portable communication apparatuses have been developed to emphasize compactness, slimness, excellent gripping property, and lightness, as well as multimedia availability, thus allowing for a wider variety of functions. In particular, future portable communication apparatuses are expected to incorporate greater multi-functionality and multi-purpose utilization, as well as being more compact and light, but also they will be modified to be suitable for various multimedia environments or Internet environments.

Conventional portable terminals are now capable of transmitting data at a high speed in addition to the basic function of performing voice communication. In other words, in response to increasing demands by consumers, portable terminals can now provide a service using a wireless communication technology capable of transmitting data at a high rate of speed, e.g., a multimedia service like transmission of moving pictures.

Recent portable communication apparatuses also tend to be equipped with a camera lens, which enables each of the communication apparatuses to transmit an image signal. That is, current conventional portable communication apparatuses may have one of an external and imbedded camera lens module, which enables a user to transmit an image to a desired partner or to take a photograph of a desired subject.

Portable communication terminals that have come into wide spread use include essential components like data input/output devices, data transmitting/receiving units, an antenna device, and a battery device. A keypad including one of a plurality of keys and a touch screen for inputting data through a touch is generally used as the data input device and a Liquid Crystal Display (LCD) is generally used as the data output device.

However, in communication environments emphasizing multimedia availability, the portable communication terminals have a limitation in scalability of functions and the communication environments become more complex, diversified, and extended, causing user's inconvenience in use of the portable communication terminals in various aspects.

For example, in the portable communication terminal, an LCD should have a wide width to provide visual comfort to the user, a keypad should have many keys to facilitate user's data input, and a battery should have large capacity to allow the user to use the portable communication terminal for a long period of time. In particular, when the battery is exhausted during the use of the portable communication terminal, the user cannot use the portable communication terminal and it is also inconvenient for the user to carry a charging device at all times.

For these reasons, there is a need for a slave unit to extend a limited function of the conventional portable communication terminal.

It is, therefore, the object of the present invention to provide a slave unit for a multimedia portable communication terminal, which can be used or carried independently of or as one body with the portable communication terminal.

This object is solved by the subject matter of the independent claims.

Preferred embodiments are defined in the dependent claims.

It is an aspect of the present invention to provide a slave unit having one combining means and at least two holding means in order to stably support a combining operation and a combined state between extending modules.

It is another aspect of the present invention to provide a slave unit in which a combining means is positioned between holding means to efficiently guide a combining operation or a combined state.

It is a further aspect of the present invention to provide a slave unit that can conceptually be used as an accessory.

In order to achieve the above object and other aspects of the present invention, there is provided a slave unit for a multimedia portable communication terminal, which can be used or carried independently of or as one body with the multimedia portable terminal. The slave unit includes a first extending module employed as the slave unit as being connected with the multimedia portable terminal in a wired or wireless manner, a second extending module employed as the slave unit as being connected in parallel with the first extending module, and a combining means for combining the first extending module with the second extending module as one body in parallel with each other.

The present invention will become more apparent from the following detailed description when taken in conjunction with the accompanying drawings in which:
FIG. 1 is a perspective view of a slave unit that is combined with a portable terminal;
FIG. 2 is a perspective view of a first extending module according to the present invention; and
FIG. 3 is a perspective view of a second extending module according to the present invention.

A preferred embodiment of the present invention will now be described in detail with reference to the accompanying drawings. In the following description, a detailed description of known functions and configurations incorporated herein has been omitted for conciseness.

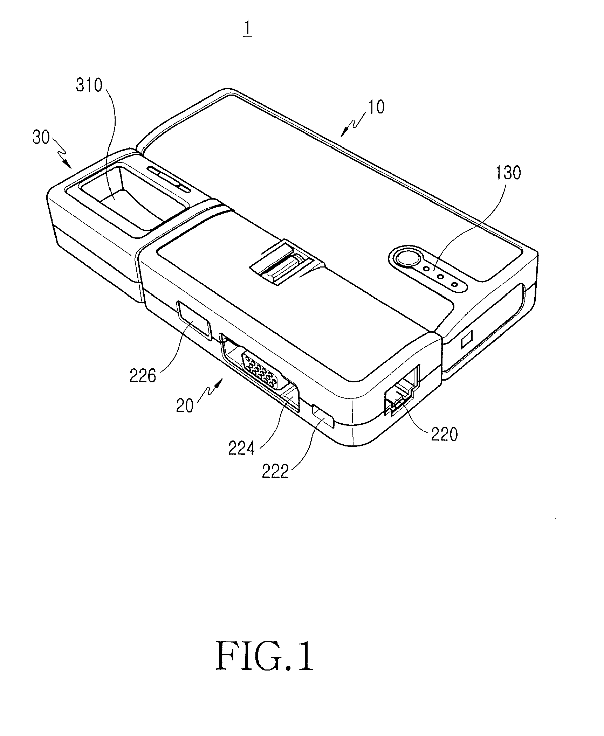

As shown in FIG. 1, a slave unit 1 is connectable to a multimedia portable communication terminal in a wired or wireless manner. In particular, the slave unit 1 is used as a concept of an accessory for the multimedia portable communication terminal and it is carried or moved together with the multimedia portable communication terminal. In other words, the slave unit 1 may be used or carried independently of or as one body with the portable communication terminal. The slave unit 1 includes any device that can be used to extend the function of the portable communication terminal. For example, the slave unit 1 has data input/output functions, an antenna function, a battery function, and a camera function. Herein, a battery will be taken as an example of the slave unit 1.

The slave unit 1 includes at least two extending modules, specifically, a first extending module 10 employed as the slave unit 10 and a second extending module 20 employed as the slave unit 10 as being combined in parallel with the first extending module 10, and a combining means for combining the first extending module 10 and the second extending module 20 as one body in parallel with each other. The first extending module 10 may be used as an external battery pack by being connected to the portable communication terminal in a wired or wireless manner. However, the first extending module 10 may be a function-extending slave unit without being limited to the battery pack.

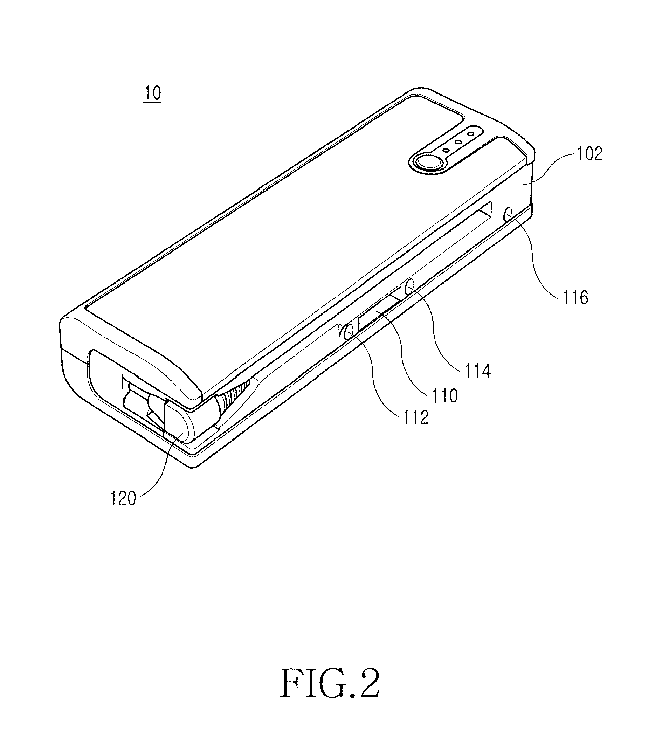

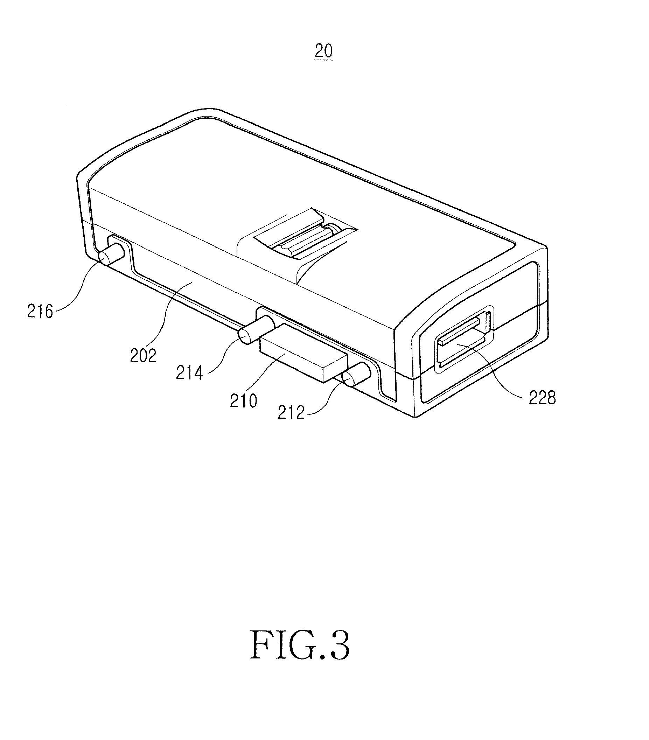

As shown in FIGs. 2 and 3, the combining means includes a protrusion and an opening with which the protrusion is combined, specifically, a first protrusion 210 extending horizontally from a side 202 of the second extending module 20 and a first opening 110 extending from a side 102 of the first extending module 10 for insertion of the first protrusion 210 and thus supporting a combining operation or a combined state. However, the first protrusion 210 may be formed in the first extending module 10 and the first opening 110 may be formed in the second extending module 20. The first opening 110 and the first protrusion 210 are preferably in a box shape to stably support the combining operation or the combined state.

The combining means further includes at least two holding means for supporting the combining operation or the combined state between the first extending module 10 and the second extending module 20. Each of the holding means includes one protrusion and one opening. The combining means is positioned between the holding means to effectively support the combining operation or the combined state between the first extending module 10 and the second extending module 20.

Each of the holding means includes one protrusion and one opening, specifically, a second protrusion 212 extending from the side 202 of the second extending module 20 horizontally and a second opening 112 extending from the side 102 of the first extending module 10 for insertion of the second protrusion 212 and supporting the combined operation or the combined state. However, the second protrusion 212 may be formed in the first extending module 10 and the second opening 112 may be formed in the second extending module 20. The second opening 112 and the second protrusion 212 are formed in a cylindrical shape to stably support the combined operation and the combined state. In FIGs. 2 and 3, three holding means are provided. In other words, reference numerals 214 and 216 indicate protrusions having the same structure as the second protrusion 212 and reference numerals 114 and 116 indicate openings having the same structure as the second opening 112.

As shown in FIG. 1, the first extending module 10 further includes a third extending module 30 that is combined in parallel with the first extending module 10. A charging slot 310 is formed on the top surface of the third extending module 30 to charge a Bluetooth module messenger (not shown). The combined state between the third extending module 30 and the first extending mode 10 or the second extending module 20 is constituted by the protrusion and the opening described above.

As shown in FIG. 1, four slot-shaped ports 220, 222, 224, and 226 for interfacing are included in sides of the second extending module 20. Reference numeral 130 indicates a lamp indicating the remaining battery capacity. In FIG. 2, a reference numeral 120 indicates an earphone that is inserted or drawn as being received in the first extending module 10. In FIG. 3, reference numeral 228 indicates a slot-shaped port for interfacing.

As described above, the slave unit according to the present invention can be used or carried independently of or as one body with the multimedia portable communication terminal, thus facilitating the use thereof. Moreover, since one combining means and at least two holding means are provided, a combining operation or a combined state between extending modules can be easily supported.

While the invention has been shown and described with reference to a preferred embodiment thereof, it will be understood by those skilled in the art that various changes in form and details may be made therein without departing from the scope of the invention as defined by the appended claims.

## Claims

1. A slave unit for a multimedia portable terminal, wherein the slave unit can be used or carried independently of or as one body with the multimedia portable terminal, the slave unit comprising:
a first extending module employed as the slave unit as being connected with the multimedia portable terminal in a wired or wireless manner;
a second extending module employed as the slave unit as being connected in parallel with the first extending module; and
a combining means for combining the first extending module with the second extending module as one body in parallel with each other.

2. The slave unit of claim 1, wherein the combining unit comprises at least two holding means for supporting a combining operation or a combined state between the first extending module and the second extending module.

3. The slave unit of claim 2, wherein the combining means is positioned between the holding means to efficiently support the combining operation or the combined state between the first extending module and the second extending module.

4. The slave unit of claim 1, wherein the combining means comprises:
a first protrusion extending horizontally; and
a first opening into which the first protrusion is inserted to support a combining operation or a combined state between the first extending module and the second extending module,
wherein the first protrusion and the first opening have a box shape.

5. The slave unit of claim 2, wherein each of the at least two holding means comprises:
a second protrusion extending horizontally; and
a second opening into which the second protrusion is inserted to further support the combining operation or the combined state between the first extending module and the second extending module,
wherein the second protrusion and the second opening have in a cylindrical shape.

6. The slave unit of one of claims 1 to 5, wherein the first extending module includes an external battery pack for supplying a power source.

7. The slave unit of one of claims 1 to 5, wherein the first extending module comprises a third extending module combined in parallel with the first extending module, wherein a charging slot is formed on a top surface of the third extending module.
